# EUROPÄISCHE PATENTSCHRIFT

(11) **EP 1 817 991 B1**
(45) Veröffentlichungstag und Bekanntmachung des Hinweises auf die Patenterteilung: **15.09.2010**
(21) Anmeldenummer: 07101100.1
(22) Anmeldetag: 24.01.2007
(51) Int. Cl.: A47J 31/44

(54) **Heissgetränkezubereitungsmaschine**
Hot drinks machine
Machine de préparation de boissons chaudes

(30) Priorität: 10.02.2006 DE 202006002124 U
(43) Veröffentlichungstag der Anmeldung: 15.08.2007
(73) Patentinhaber: WIK Far East Ltd., North Point, Hong Kong (CN)
(72) Erfinder: Steckhan, Markus, 45481 Mühlheim (DE)
(74) Vertreter: Haverkamp, Jens

(56) Entgegenhaltungen:
- EP-A- 0 791 321
- EP-A- 1 716 796
- US-A- 6 099 878

## Beschreibung

Die Erfindung betrifft eine Heißgetränkezubereitungsmaschine mit einer Einrichtung zum Erwärmen von Trinkgefäßen, in die ein durch die Maschine bereitetes Getränk ausgegeben werden soll, umfassend eine Brüheinheit und einen an die Brüheinheit angeschlossenen Getränkeauslauf und eine unterhalb des Getränkeauslaufes befindliche Trinkgefäßstellfläche, auf der ein Trinkgefäß zum Aufnehmen eines bereiteten und durch den Auslauf ausgegebenen Heißgetränkes positioniert wird

Heißgetränkezubereitungsmaschinen, wie beispielsweise Kaffeemaschinen, insbesondere wenn diese als so genannte Vollautomaten konzipiert sind, verfügen in aller Regel über eine Tassenerwärmungseinrichtung. Bei dieser Tassenerwärmungseinrichtung handelt es sich in aller Regel um eine mittels einer elektrischen Widerstandsheizung beheizte Wärmeplatte, auf der die zum Bereiten eines Kaffeegetränks zu verwendenden Tassen abgestellt sind. Eine Tassenenrvärmung erfolgt somit durch den Wärmeübergang von der Warmhalteplatte auf die Tasse. Verbleibt die Tasse ausreichend lange auf der Tassenerwärmungsplatte, kann die Tasse auf die Temperatur der Tassenerwärmungsplatte gebracht werden. Nachteilig bei diesem Tassenerwärmungsprinzip ist, dass eine hinreichende Tassenerwärmung eine nicht unbeträchtliche Zeit in Anspruch nimmt. Darüber hinaus wird zum Aufrechterhalten der Tassenerwärmungstemperatur eine nicht unbeträchtliche Energiemenge benötigt, wobei zu berücksichtigen ist, dass mit derartigen Tassenerwärmungseinrichtungen ausgerüstete Kaffeevollautomaten üblicherweise über viele Stunden eingeschaltet sind und über die gesamte Zeit die Tassenerwärmungseinrichtung bestromt ist.

Eine Erwärmung von Tassen ist vor allem dann angestrebt, wenn das auszugebende Kaffeegetränk nur eine geringe Flüssigkeitsmenge aufweist, wie beispielsweise bei einem Espresso. Bei anderen Kaffeegetränken, wie etwa bei einem Kaffee-Milchgetränk ist aufgrund der größeren, in die Tasse einfließenden heißen Flüssigkeitsmenge ein Vorerwärmen der Tasse nicht unbedingt notwendig. Gleichwohl greift man auch bei solchen

Getränken gerne auf vorgewärmte Tassen zurück.

Bekannt ist des Weiteren, einzelne Trinkgefäße, beispielsweise Cognacgläser durch Einlaufen lassen von Heißwasser oder Heißdampf anzuwärmen. Im Gaststätten- und Restaurantbereich bedient man sich hierzu des Heißwasser- bzw. Dampfauslasses der vorhandenen Kaffeemaschinen. Üblicherweise wird dieser Auslass jedoch eingesetzt, um Milch aufzuschäumen. Soll dieser Auslass zur Erwärmung eines Trinkgefäßes genutzt werden, in das ein milchfreies Getränk ausgegeben werden soll, ist daher sicher zu stellen, dass dieser sauber und frei von Milchresten ist. Daher eignet sich diese Möglichkeit zum individuellen Erwärmen einzelner Trinkgefäße, beispielsweise von Tassen als regelmässiges Tassenerwärmungsverfahren nicht. Überdies ist bei einer Benutzung derartiger Heißwasser- bzw. Dampfauslässe eine sorgfältige Handhabung notwendig, damit sich ein Benutzer nicht verbrüht, da die zu erwärmenden Trinkgefäße, insbesondere wenn es sich um kleine Trinkgefäße handelt, von Hand gehalten werden. Eine solche Kaffeemaschine, konzipiert als Siebträgerespressomaschine ist aus FR 2 604 077 A1 bekannt.

EP 0 791 321 A1 offenbart eine Espressomaschine mit einer Einrichtung zum Ausgeben von geschlagener Milch. Diese Einrichtung verfügt über einen Dampfgenerator, durch den eine Milchaufschäumeinrichtung betrieben wird. Zur Ausgabe der aufgeschäumten Milch verfügt diese Einrichtung über eine Milchausgabe. Die Milchausgabe ist an einem Arm verschwenkbar gehalten und kann somit in unterschiedliche Positionen bezüglich der Trinkgefäßstellfläche gebracht werden. Die Milchausgabe kann in die unmittelbare Nachbarschaft des Kaffeeauslaufes gebracht werden, um gleichzeitig in ein darunter positioniertes Trinkgefäß das bereitete Kaffeegetränk zusammen mit der aufgeschäumten Milch einzubringen. In einer anderen Position ist die Milchausgabe von dem Getränkeauslauf beabstandet. Ausführungen hinsichtlich einer Tassenerwärmung sind in diesem Dokument nicht enthalten.

EP 1 716 796 A1 sowie US 6,099,878 A offenbaren ähnliche Heißgetränkezubereitungsmaschinen wie in EP 0 791 321 beschrieben. Auch in diesen Dokumenten finden sich keine Offenbarungen, wie eine Tassenerwärmung vorgenommen oder verbessert werden kann.

Ausgehend von diesem diskutierten Stand der Technik liegt der Erfindung daher die Aufgabe zugrunde, eine eingangs genannte Kaffeemaschine dergestalt weiter zu bilden, dass eine Tassenerwärmung unter Vermeidung der zu dem vordiskutierten Stand der Technik aufgezeigten Nachteile möglich ist.

Diese Aufgabe wird erfindungsgemäß durch eine eingangs genannte, gattungsgemäße Kaffeemaschine gelöst, bei der die Heißgetränkezubereitungsmaschine als Einrichtung zum Erwärmen eines Trinkgefäßes einen in unmittelbarer Nachbarschaft zu dem Getränkeauslauf angeordneten Dampfauslass umfasst, welcher Dampfauslass eine in Richtung zu der unterhalb des Getränkeauslaufs befindlichen Trinkgefäßstellfläche gerichtete Auslassrichtung des ausgegeben Dampfes aufweist, damit der aus dem Dampfauslass austretende Dampf von oben in ein unter den Getränkeauslauf positioniertes Trinkgefäß eingebracht wird.

Bei dieser Kaffeemaschine befindet sich zumindest ein Dampfauslass, vorzugsweise als Dampfauslassdüse konzipiert, in unmittelbarer Nachbarschaft zu dem Getränkeauslauf. Der aus dem Dampfauslass austretende Dampf strömt in Richtung zu der oder den unter dem oder den Kaffeeauslässen positionierten Trinkgefäßen, beispielsweise Tassen, in die das zu bereitende Kaffeegetränk ausgegeben werden soll. Mit dieser Kaffeemaschine ist es möglich, unmittelbar vor dem Ausgeben des bereiteten Getränks eine als Trinkgefäß beispielsweise dienende Tasse durch ein oder mehrere Dampfstöße anzuwärmen. Bei diesem Vorgang ist das Trinkgefäß unterhalb des Getränkeauslaufes positioniert und muss nicht von Hand gehalten werden. Dieses gilt sowohl für größere als auch für kleinere Trinkgefäße. In einer Weiterbildung ist vorgesehen, dass der Getränkeauslauf zusammen mit dem Dampfauslass in einer Auslaufeinheit in der Höhe zum Anpassen an die Höhe eines Trinkgefäßes einrichtbar ist. Die Intensität und Dauer des Anwärmvorganges kann in Abhängigkeit von dem zubereiteten Getränk und/oder in Abhängigkeit von der Größe des zum Auffangen des bereiteten Getränks verwendeten Trinkgefäßes unterschiedlich sein. Der aus dem Dampfauslass ausgestossene Dampf zum Erwärmen des Trinkgefäßes wird von oben in das Trinkgefäß eingebracht. Je nach Ausgestaltung des Dampfauslasses und der Ausbildung des Dampfstoßes hinsichtlich seiner Öffnungsweite ist es möglich, den austretenden Dampf ausschließlich in das Trinkgefäß und/oder auch an die Außenwand des Trinkgefäßes zu bringen. Die große Oberfläche des austretenden Dampfes hat eine rasche Erwärmung des Trinkgefäßes zu Folge Da typischerweise ein sehr trockener Dampf für die Tassenanwärmung verwendet wird, wird das Trinkgefäß durch den Vorgang des Erwärmens nicht, zumindest nicht übermäßig benetzt.

Das Einbringen des Dampfes zum Anwärmen des oder der Trinkgefäße, die unmittelbar unterhalb des Getränkeauslaufes angeordnet sind, hat überdies zum Vorteil, dass aufgrund der sich einstellenden Wärmekonvektion Wärme in den Bereich des Getränkeauslaufes gelangt und dieser durch den Vorgang der Tassenerwärmung ebenfalls erwärmt wird. Einer Abkühlung des bereiteten Kaffeegetränks auf seinem Weg von der Brühkammer über den Getränkeauslauf in das darunter positionierte Trinkgefäß ist aufgrund der zeitlich vor dem Auslaufen des bereiteten Getränkes durchgeführten Tassenerwärmung und der damit einhergehenden Erwärmung des Auslaufes entgegengewirkt. Der oder die Dampfauslässe sind gemäß einem Ausführungsbeispiel in unmittelbarer Nachbarschaft zu dem oder den Getränkeausläufen angeordnet. Eine Erwärmung des Bereiches des Auslaufes erfolg dann nicht nur durch den thermisch aufsteigenden Dampf sondern auch durch die von dem Dampfauslass und der Versorgungsleitung abgestrahlte Wärme.

Der oder die Dampfauslässe sind konzipiert, damit aus diesen Heißdampf, jedoch kein Heißwasser, zumindest nicht in nennenswerten Umfange austritt. Bei der Konzeption von zwei Dampfauslässen besteht grundsätzlich die Möglichkeit, diese an eine gemeinsame Heißdampfversorgungsleitung anzuschließen. Möglich ist ebenfalls, zwei individuelle Dampfversorgungsleitungen vorzusehen.

Nachfolgend ist die Erfindung anhand eines Ausführungsbeispiels unter Bezugnahme auf die beigefügten Figuren beschrieben. Es zeigen:
- **Fig. 1:**: Eine schematisierte Frontansicht einer als Kaffeemaschine ausgebildeten Heißgetränkezubereitungsmaschine,
- **Fig.2 :**: eine schematisierte Teilquerschnittsdarstellung der Kaffeemaschine der Figur 1 und
- **Fig. 3:**: eine schematisierte Draufsicht auf zwei unterhalb des Getränkeauslaufes angeordnetenTassen.

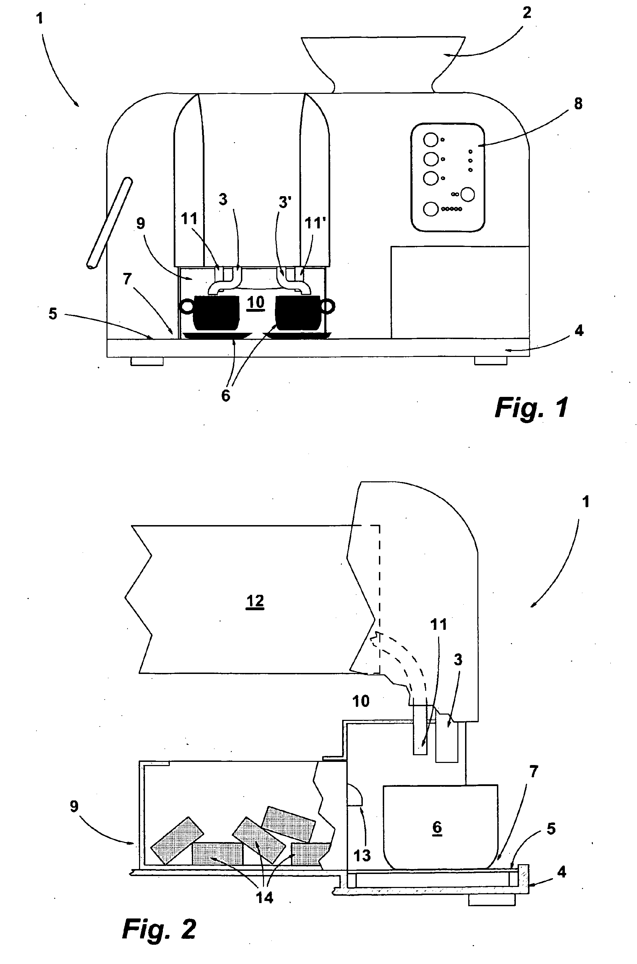

Eine als Kaffeemaschine 1 konzipierte Heißgetränkezubereitungsmaschine ist als sogenannter Vollautomat ausgebildet. Dieser verfügt über einen Bohnenbehälter 2, ein Mahlwerk zum portionsweisen Mahlen von in dem Bohnenbehälter 2 enthaltenen Kaffeebohnen, eine Brüheinheit nebst Peripherieeinrichtungen sowie einen an den Ausgang der Brüheinheit angeschlossenen Getränkeauslauf, der bei dem dargestellten Ausführungsbeispiel zwei Ausläufe 3, 3' umfasst. Unterhalb des Getränkeauslaufes befindet sich eine Tropfwanne 4, die oberseitig durch ein als Trinkgefäßstellfläche dienendes Tropfblech 5 verschlossen ist. Die Oberseite des Tropfbleches 5 dient somit zum Abstellen einer oder mehrerer Tassen für eine Getränkeausgabe. In Figur 1 ist unter jedem Auslass 3, 3' jeweils eine Tasse 6 zur Aufnahme eines zubereitenden Kaffeegetränks abgestellt.

Über ein Bedienfeld 8 kann die Kaffeemaschine 1 hinsichtlich des zuzubereitenden Getränks angesteuert werden, wobei in den dargestellten Ausführungsbeispiel über entsprechende Tasten des Bedienfeldes 8 unter anderem die Zubereitung des gewünschten Kaffeegetränks, die verwendete Kaffeemenge, die Tassengröße und dergleichen eingestellt werden können.

Maschinenseitig befindet sich hinter den Ausläufen 3, 3' ein Tresterbehälter 9, dessen Frontseite 10 in Figur 1 erkennbar ist. Bei dem Tresterbehälter 9 handelt es sich um einen nach Art einer Schublade konzipierten Behälter, der aus dem Gehäuse der Kaffeemaschine 1 herausziehbar und umgekehrt in dieses einschiebbar ist. Der Tresterbehälter 9 dient zum Auffangen der aus der Brüheinheit ausgestossenen, ausgelaugten Filterkuchen.

Die Kaffeemaschine 1 verfügt des Weiteren über maschinenseitig hinter den Ausläufen 3, 3' und vor dem Tresterbehälter 9 angeordnete Dampfauslässe 11, 11'. Bei den Dampfauslässen 11, 11' handelt es sich um Dampfauslassdüsen, die nach unten in das Innere der beiden Tassen 6 gerichtet sind (vgl. auch Fig. 7). Die Dampfauslässe 11, 11' sind benachbart zu den Getränkeausläufen 3, 3' angeordnet, wie dieses auch aus der Figur 2 erkennbar ist. Die Dampfauslässe 11, 11' dienen zum Erwärmen der unterhalb der Ausläufe 3, 3' abgestellten Tassen 6 bevor aus den Ausläufen 3, 3' das bereitete Heiße Kaffeegetränk ausgegeben wird. Die Dampfauslässe 11, 11' sind in nicht näher dargestellter Art und Weise an eine Dampfzuführleitung angeschlossen, wobei bei dem dargestellten Ausführungsbeispiel jeder Dampfauslass 11, 11' an eine eigene Dampfversorgungsleitung angeschlossen ist. Die Dampfversorgungsleitungen stehen in nicht näher dargestellter Art und Weise mit einem Heizblock in Verbindung, in dem der Heißdampf erzeugt wird. Bei dem erzeugten Dampf handelt es sich um einen relativ trockenen Wasserdampf.

Bevor aus den Getränkeausläufen 3, 3' das bereitete Kaffeegetränk ausgegeben wird, werden aus den Dampfauslässen 11, 11' ein oder mehrere Dampfstösse ausgelassen. Der ausgestossene Dampf dringt ein in das Innere der Tassen 6, wodurch diese sich erwärmen. Dieser Vorgang wird solange und/oder so häufig wiederholt bis die Tasse 6 die gewünschte Temperatur erreicht hat. Da der austretende Dampf eine Temperatur von mehr als einhundert Grad Celsius aufweist, erfolgt eine Erwärmung der Tassen in kurzer Zeit. Innerhalb eines Zyklusses zum Bereiten eine Kaffeegetränkes wird beispielsweise parallel zum Mahlen der Bohnen nach einem anfänglichen Aufheizen des Heizblockes und Erzeugen des Dampfes, der unter Umständen auch in einem Dampfspeicher zwischen bevorratet werden kann, die Tassenerwärmung durch Ausgeben einer oder mehrerer Dampfdosen. Diese Zeit innerhalb eines Brühzyklusses der Kaffeemaschine ist ausreichend, dass die unterhalb der Ausläufe 3, 3' positionierten Tassen 6 bestimmungsgemäß angewärmt werden können, bevor das Heiße Kaffeegetränk ausgegeben wird. Dabei ist es zweckmäßig, wenn der aus den Dampfauslässen 11, 11' austretende Dampf sich nebelartig verteilt, damit dieser eine große Oberfläche einnimmt. Aufgrund des austretenden Dampfes und der sich dadurch einstellenden Konvektion werden gleich die Ausläufe 3, 3' sowie der die Ausläufe 3, 3' umgebende Bereich erwärmt. Die Ausläufe 3, 3' sind an die in Figur 2 mit dem Bezugszeichen 12 gekennzeichnete Brühkammer angeschlossen. Im Zuge dieser Erwärmung wird aufgrund der Anordnung des Ausganges der Brühkammer 12 in möglichst grosser Nähe zu den Ausläufen 3, 3' quasi der gesamte Auslaufabschnitt erwärmt und der aus der Brühkammer 12 austretende Heiße Kaffee entsprechend der Vorerwärmung der Ausläufe 3, 3' und der gegebenenfalls vorhandenen Verbindungsleitungen entsprechend weniger abgekühlt.

Der Tresterbehälter 9 verfügt vorderseitig über einen Griff 13, damit dieser ohne weiteres aus dem Gehäuse der Kaffeemaschine 1 herausgezogen werden kann. In dem Tresterbehälter 9 sind einige ausgelaugte Kaffeefilterkuchen 14 angeordnet.

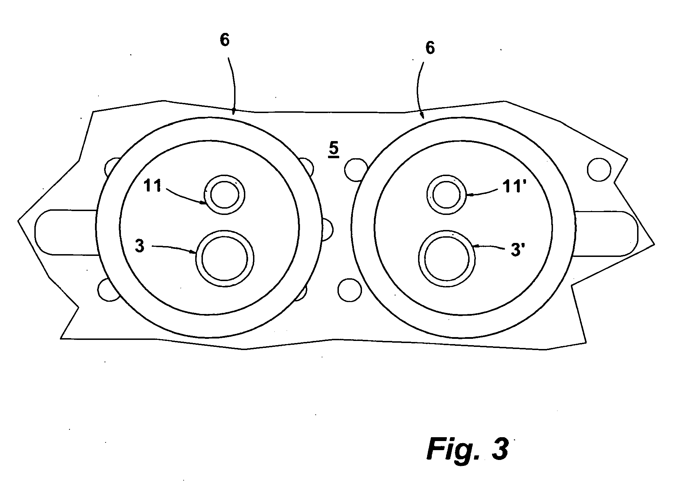

Figur 3 zeigt die Anordnung der Ausläufe 3, 3' in Bezug auf die unterhalb der Ausläufe 3, 3' abgestellten Tassen 6. Die Tassen 6 sind auf dem als Trinkgefäßstellfläche dienenden Tropfblech 5 abgestellt. Die Ausläufe 3, 3' sind in einem Querschnitt schematisiert dargestellt. Benachbart zu den Ausläufen 3, 3' befinden sich die Dampfauslässe 11, 11'. Figur 3 verdeutlicht, dass die Dampfauslässe 11, 11'ebenfalls in das Innere der Tassen 6 gerichtet sind. Der Abstand der Ausläufe 3, 3' sowie der Dampfauslässe 11, 11' voneinander ist so bemessen, dass bei Ausgabe einer einzigen Portion beide Ausläufe 3, 3' sowie beide Dampfauslässe 11, 11' gemeinsam in das Innere einer Tasse weisen.

Die Dampfauslässe 11, 11' können ebenfalls benutzt werden, um aus diesen Heißwasser austreten zu lassen. In einem solchen Fall wird der die Dampfauslässe 11, 11' beliefernde Heizblock mit entsprechend geringerer Energie beheizt, damit das Wasser nicht verdampft. Gleichfalls ist es grundsätzlich möglich, die Dampfauslässe 11, 11' zum Ausgeben aufgeschäumter Milch zu verwenden. Zusätzlich zu den Dampfauslässen 11, 11' besteht ebenfalls die Möglichkeit, zusätzliche Auslässe für aufgeschäumte Milch neben den Dampfauslässen 11, 11' bzw. den Ausläufen 3, 3' anzuordnen.

Die Beschreibung der Erfindung macht deutlich, dass mit dieser Heißgetränkezubereitungsmaschine, die lediglich in der Figurenbeschreibung beispielhaft als Kaffeemaschine beschrieben ist, eine rasche und individuellen Bedürfnissen gerecht werdende Tassenerwärmung möglich ist.

### Bezugszeichenliste

- 1: Kaffeemaschine
- 2: Bohnenbehälter
- 3, 3': Getränkeauslauf
- 4: Tropfwanne
- 5: Tropfblech
- 6: Tasse
- 7: Stellfläche
- 8: Bedienfeld
- 9: Tresterbehälter
- 10: Frontseite
- 11, 11': Dampfauslass
- 12: Brüheinheit
- 13: Griff
- 14: ausgelaugter Filterkuchen

## Patentansprüche

1. Heißgetränkezubereitungsmaschine mit einer Einrichtung zum Erwärmen von Trinkgefäßen (6), in die ein durch die Maschine (1) bereitetes Getränk ausgegeben werden soll, umfassend eine Brüheinheit und einen an die Brüheinheit angeschlossenen Getränkeauslauf (3, 3') und eine unterhalb des Getränkeauslaufes (3, 3') befindliche Trinkgefäßstellfläche (5), auf der ein Trinkgefäß (6) zum Aufnehmen eines bereiteten und durch den Auslauf (3, 3') ausgegebenen Heißgetränkes positioniert wird, **dadurch gekennzeichnet, dass** die Heißgetränkezubereitungsmaschine (1) als Einrichtung zum Erwärmen eines Trinkgefäßes (6) einen in unmittelbarer Nachbarschaft zu dem Getränkeauslauf (3, 3') angeordneten Dampfauslass (11, 11') umfasst, welcher Dampfauslass (11, 11') eine in Richtung zu der unterhalb des Getränkeauslaufs (3, 3') befindlichen Trinkgefäßstellfläche (5) gerichtete Auslassrichtung des ausgegeben Dampfes aufweist, damit der aus dem Dampfauslass (11, 11') austretende Dampf von oben in ein unter den Getränkeauslauf (3, 3') positioniertes Trinkgefäß (6) eingebracht wird.

2. Heißgetränkezubereitungsmaschine nach Anspruch 1, **dadurch gekennzeichnet, dass** der Dampfauslass (11, 11') zusammen mit dem Getränkeauslauf (3, 3') in einer baulichen Einheit - einer Auslaufeinheit - angeordnet ist.

3. Heißgetränkezubreitungsmaschine nach Anspruch 2, **dadurch gekennzeichnet, dass** die Auslaufeinheit hinsichtlich ihres Abstandes zur Trinkgefäßstellfläche einrichtbar ist.

4. Heißgetränkezubereitungsmaschine nach einen der Ansprüche 1 bis 3, **dadurch gekennzeichnet, dass** der Getränkeauslauf als Doppelauslauf konzipiert ist und diesem Auslauf ein einziger Dampfauslass zugeordnet ist.

5. Heißgetränkezubereitungsmaschine nach einem der Ansprüche 1 bis 4, **dadurch gekennzeichnet, dass** der Getränkeauslauf (3, 3') als Doppelauslauf konzipiert ist und jedem Auslauf (3, 3') des Doppelauslaufes ein Dampfauslass (11, 11') zugeordnet ist.

6. Heißgetränkezubereitungsmaschine nach Anspruch 5, **dadurch gekennzeichnet, dass** die beiden Dampfauslässe an eine gemeinsame Dampfversorgungsleitung angeschlossen sind.

7. Heißgetränkezubereitungsmaschine nach einem der Ansprüche 1 bis 6, **dadurch gekennzeichnet, dass** die Heißgetränkezubereitungsmaschine umschaltbar ist, damit aus dem Dampfauslass der einer Trinkgefäßerwärmung dienende Dampf und/oder Heißwasser ausgegeben werden kann.

8. Heißgetränkezubereitungsmaschine nach einem der Ansprüche 1 bis 7, **dadurch gekennzeichnet, dass** die Heißgetränkezubereitungsmaschine (1) eine Kaffeemaschine ist.

9. Verfahren zum Bereiten eines Heißgetränkes mittels einer einen Dampfauslass (11, 11') aufweisenden Heißgetränkezubereitungsmaschine (1) nach einem der Ansprüche 1 bis 8, **dadurch gekennzeichnet, dass** unmittelbar vor der Ausgabe des bereiteten Getränkes ein oder mehrere Dampfstöße aus dem Dampfauslass (11, 11') von oben in ein darunter positioniertes, zur Aufnahme des bereiteten Getränkes vorgesehenes Trinkgefäß (6) abgegeben werden, bevor das bereitete Getränk über einen Getränkeauslauf (3, 3') in das auf diese Weise vorgewärmte Trinkgefäß (6) ausgegeben wird, wobei die Dampfabgabe zum Erwärmen des Trinkgefäßes (6) in das zur Getränkeaufnahme unterhalb des Getränkeauslaufes (3, 3') positionierte Trinkgefäß erfolgt.

10. Verfahren nach Anspruch 9, **dadurch gekennzeichnet, dass** durch die ein oder mehreren Dampfstöße trockener Dampf zum Erwärmen des oder der Trinkgefäße (6) ausgegeben wird.

11. Verfahren nach Anspruch 9 oder 10, **dadurch gekennzeichnet, dass** parallel zur Bereitung des auszugebenden Heißgetränkes die
Erwärmung des oder der zur Aufnahme des bereiteten Heißgetränkes vorgesehenen Trinkgefäße (6) erfolgt.

12. Verfahren nach einem der Ansprüche 9 bis 11, **dadurch gekennzeichnet, dass** zur Erwärmung des oder der Trinkgefäße (6) erzeugte Dampf in einem Dampfspeicher zwischen bevorratet wird.

13. Verfahren nach einem der Ansprüche 9 bis 12, **dadurch gekennzeichnet, dass** zum Erwärmen des oder der Trinkgefäße (6) der oder die Dampfstöße ausgeben werden, dass diese sich nebelartig verteilen.

## Claims

1. Hot beverage machine including a device for heating drinking vessels (6) into which a beverage prepared by the machine (1) is to be dispensed, said machine comprising a brewing unit and a beverage outlet (3, 3') connected to the brewing unit and a drinking vessel standing surface (5) located below the beverage outlet (3, 3'), on which drinking vessel standing surface a drinking vessel (6) is positioned to receive a prepared hot beverage that is dispensed through the outlet (3, 3'), **characterized in that**, as a device for heating a drinking vessel (6), the hot beverage machine (1) includes a steam outlet (11, 11') that is located in the direct vicinity of the beverage outlet (3, 3'), the direction of steam output by said steam outlet (11, 11') being directed towards the drinking vessel standing surface (5) that is located below the beverage outlet (3, 3') such that the steam emerging from the steam outlet (11, 11') is introduced from above into a drinking vessel (6) that is positioned below the beverage outlet (3, 3').

2. Hot beverage machine according to Claim 1, **characterized in that** the steam outlet (11, 11') is located together with the beverage outlet (3, 3') in one structural unit - an outlet unit.

3. Hot beverage machine according to Claim 2, **characterized in that** the spacing between the beverage standing surface and the outlet unit is variable.

4. Hot beverage machine according to one of Claims 1 to 3, **characterized in that** the beverage outlet is designed as a double outlet and said outlet has associated therewith one single steam outlet.

5. Hot beverage machine according to one of Claims 1 to 4, **characterized in that** the beverage outlet (3, 3') is designed as a double outlet and each outlet (3, 3') of the double outlet has associated therewith a steam outlet (11, 11').

6. Hot beverage machine according to Claim 5, **characterized in that** the two steam outlets are connected to a common steam supplying line.

7. Hot beverage machine according to one of Claims 1 to 6, **characterized in that** the hot beverage machine is switchable so that steam for heating the beverage vessel and/or hot water can be output from the steam outlet.

8. Hot beverage machine according to one of Claims 1 to 7, **characterized in that** the hot beverage machine (1) is a coffee machine.

9. Method for preparing a hot beverage by means of a hot beverage machine (1) including a steam outlet (11, 11') according to one of Claims 1 to 8, **characterized in that** directly before the prepared beverage is dispensed, one or a plurality of steam shots are discharged from above out of the steam outlet (11, 11') into a drinking vessel (6) that is positioned below said steam outlet and is provided for receiving the prepared beverage, before the prepared beverage is dispensed via a beverage outlet (3, 3') into the drinking vessel (6) that has been preheated in this manner, wherein the steam output for heating the drinking vessel (6) is effected into the drinking vessel (6) that is positioned below the beverage outlet (3, 3') for receiving the beverage.

10. Method according to Claim 9, **characterized in that** by means of the one or a plurality of steam shots dry steam is output to heat the drinking vessel or vessels (6).

11. Method according to Claim 9 or 10, **characterized in that** the heating of the drinking vessel or vessels (6) provided for receiving the prepared hot beverage is effected parallel to the preparation of the hot beverage.

12. Method according to one of Claims 9 to 11, **characterized in that** steam generated for heating the drinking vessel or vessels (6) is temporarily stored in a steam storage means.

13. Method according to one of Claims 9 to 12, **characterized in that** for heating the drinking vessel or vessels (6) the steam shot or shots are output such that they are distributed in a mist-like manner.

## Revendications

1. Machine de préparation de boissons chaudes comprenant un dispositif pour chauffer des récipients (6) pour boire, dans lesquels la machine (1) doit verser une boisson préparée, comprenant une unité d'échaudage et un écoulement (3, 3') des boissons raccordé à l'unité d'échaudage et une surface de dépose (5) du récipient pour boire située sous l'écoulement (3, 3') des boissons, sur laquelle on positionne un récipient (6) pour boire destiné à recevoir la boisson chaude préparée et dispensée par l'écoulement (3, 3'), **caractérisée en ce que** la machine de préparation de boissons chaudes (1) comprend en guise de dispositif pour chauffer des récipients (6) pour boire, une sortie de vapeur (11, 11') disposée directement à côté de l'écoulement (3, 3') des boissons, laquelle sortie de vapeur (11, 11') présente un sens d'échappement de la vapeur dispensée, orienté vers la surface de dépose (5) du récipient qui se trouve sous l'écoulement (3, 3') des boissons, afin que la vapeur s'échappant par la sortie de vapeur (11, 11') soit dirigée d'en haut vers un récipient (6) pour boire positionné sous l'écoulement (3, 3') des boissons.

2. Machine de préparation de boissons chaudes selon la revendication 1 **caractérisée en ce que** la sortie de vapeur (11, 11') est disposée avec l'écoulement (3, 3') des boissons, dans une unité constructive, en l'occurrence une unité d'écoulement.

3. Machine de préparation de boissons chaudes selon la revendication 2 **caractérisée en ce que** l'unité d'écoulement est réglable en ce qui concerne sa distance par rapport à la surface de dépose du récipient pour boire.

4. Machine de préparation de boissons chaudes selon l'une des revendications 1 à 3 **caractérisée en ce que** l'écoulement des boissons est conçu comme un écoulement double et qu'une sortie unique de vapeur est affectée à cet écoulement.

5. Machine de préparation de boissons chaudes selon l'une des revendications 1 à 4 **caractérisée en ce que** l'écoulement des boissons (3, 3') est conçu comme un écoulement double et qu'une sortie de vapeur (11, 11') est affectée à chaque écoulement (3, 3') de l'écoulement double.

6. Machine de préparation de boissons chaudes selon la revendication 5 **caractérisée en ce que** les deux sorties de vapeur sont raccordées à un conduit commun d'alimentation en vapeur.

7. Machine de préparation de boissons chaudes selon l'une des revendications 1 à 6 **caractérisée en ce que** la machine de préparation de boissons chaudes peut être commutée, de sorte que la sortie de vapeur destinée à chauffer le récipient pour boire puisse dispenser de la vapeur et/ou de l'eau chaude.

8. Machine de préparation de boissons chaudes selon l'une des revendications 1 à 7 **caractérisée en ce que** la machine de préparation de boissons chaudes (1) est une machine à café.

9. Procédé de préparation d'une boisson chaude au moyen d'une machine de préparation de boissons chaudes (1) présentant une sortie de vapeur (11, 11') selon l'une des revendications 1 à 8 **caractérisé en ce que** juste avant de dispenser une boisson préparée, un ou plusieurs jets de vapeur sont dispensés par la sortie de vapeur (11, 11') du haut vers un récipient (6) pour boire positionné en-dessous, destiné à recevoir la boisson préparée, avant que la boisson préparée ne soit versée par un écoulement des boissons (3, 3') dans le récipient (6) pour boire préchauffé de cette manière, le dégagement de vapeur destiné à réchauffer le récipient (6) pour boire se faisant dans le récipient pour boire positionné sous l'écoulement des boissons (3, 3') destiné à recevoir la boisson.

10. Procédé selon la revendication 9 **caractérisé en ce qu'**un ou plusieurs jets de vapeur sèche sont dégagés afin de réchauffer le ou les récipients (6) pour boire.

11. Procédé selon la revendication 9 ou 10 **caractérisé en ce que** le réchauffage du ou des récipients (6) pour boire prévus pour recevoir la boisson chaude préparée se fasse parallèlement à la préparation de la boisson chaude à dispenser.

12. Procédé selon l'une des revendications 9 à 11 **caractérisé en ce que** la vapeur dispensée afin de réchauffer le ou les récipients (6) pour boire est stockée de façon intermédiaire dans un réservoir à vapeur.

13. Procédé selon l'une des revendications 9 à 12 **caractérisé en ce que** le ou les jets de vapeur dispensés afin de réchauffer le ou les récipients (6) pour boire se répartissent à la manière d'un brouillard.
